Europäisches Patentamt

European Patent Office

Office européen des brevets

(19)

(11) Veröffentlichungsnummer: **0 269 104 B1**

## (12) EUROPÄISCHE PATENTSCHRIFT

(45) Veröffentlichungstag der Patentschrift: 30.10.91

(51) Int. Cl.⁵: **A23F 3/36, A23F 3/42**

(21) Anmeldenummer: 87117478.5

(22) Anmeldetag: 26.11.87

(54) **Verfahren und Vorrichtung zur Herstellung von entcoffeiniertem Tee.**

(30) Priorität: 26.11.86 DE 3640333

(43) Veröffentlichungstag der Anmeldung:
01.06.88 Patentblatt 88/22

(45) Bekanntmachung des Hinweises auf die
Patenterteilung:
30.10.91 Patentblatt 91/44

(84) Benannte Vertragsstaaten:
BE CH FR GB IT LI NL

(56) Entgegenhaltungen:
DE-A- 3 414 767
FR-A- 2 160 404
US-A- 4 167 589

JOURNAL OF AGRICULTURE & FOOD CHEMI-
STRY, Band 23, Nr. 5, 1975, Seiten 999-1003;
O. VITZTHUM et al.: "New volatile constituents of black tea aroma"

(73) Patentinhaber: **Hopfenextraktion HVG Barth,
Raiser & Co.
Auenstrasse 18-20
W-8069 Wolznach(DE)**

(72) Erfinder: **Gehrig, Manfred, Dipl.-Chem. Dr.
Lug ins Land 10
W-8069 Wolnzach(DE)**
Erfinder: **Forster, Adrian, Dipl.-Ing. Dr.
Schiessstättweg 10
W-8069 Wolnzach(DE)**

(74) Vertreter: **Wager, Peter, Dr. Dipl.-Chem.
Morassistrasse 8/II
W-8000 München 5(DE)**

## Beschreibung

Die zunehmenden Vorbehalte gegen das früher "Thein" genannte Coffein lassen die Nachfrage nach schwarzem oder grünem Tee mit vermindertem Gehalt an Coffein ansteigen. Es ist zu erwarten, daß der Anteil des entcoffeinierten Tees besonders dann wachsen wird, wenn die behandelten Tees von den unbehandelten sensorisch kaum noch zu unterscheiden sind. Das Problem der Herstellung eines qualitativ hochwertigen, entcoffeinierten Tees ist schwierig, da der zu behandelnde Tee ein an sich gebrauchsfertiges Produkt darstellt. Weitere Behandlungsschritte sollten die Qualität zumindest nicht verbessern können.

Die Verminderung des Coffeingehaltes geschieht dadurch, daß die zuvor befeuchteten Teeblätter mit einem Lösungsmittel versetzt werden. Anschließend wird der Tee getrocknet, wobei das Lösungsmittel möglichst weitgehend entfernt wird, oder der Tee wird einer weiteren wäßrigen Extraktion zur Herstellung von löslichem Tee unterzogen.

Die Verwendung von Methylenchlorid (Dichlormethan) als Lösungsmittel brachte nie ein befriedigendes Ergebnis, da mit dem Coffein ein Großteil der Geruchs- und Geschmacksstoffe mit entfernt wurde. Aus EU-PS 0 050 482 ist der Versuch bekannt, den Aromaverlust zu vermindern, indem das Methylenchlorid vor der Extraktion mit Inhaltsstoffen des Tees (außer Coffein) gesättigt wird.

Wegen gesundheitlicher Bedenken und legislativer Maßnahmen gegen die Verwendung von Methylenchlorid zur Entcoffeinierung von Tee wird nunmehr ersatzweise Ethylacetat eingesetzt (siehe Food Chemical News, July 16, 1984, S. 25). Aber auch dieses Lösungsmittel erfüllt nicht die Erwartungen, die an seinen Einsatz für die Herstellung eines hochwertigen Produktes gestellt werden. Zudem müssen die Anlagen explosionsgeschützt sein.

Aus DE-PS 21 27 642 ist ein Verfahren bekannt, bei dem fermentiertem schwarzem Tee mit einem gesundheitlich unbedenklichen Lösungsmittel das Coffein entzogen wird, wobei Geschmack und Aroma vollständig erhalten bleiben sollen. Dazu werden in einem ersten Schritt mit einem trockenen, in bezug auf Druck und Temperatur überkritischen Gas, vorzugsweise Kohlendioxid, die Aromastoffe entzogen. In einem zweiten Schritt wird dem angefeuchteten Tee mit ebenfalls überkritischem, mit Wasser gesättigtem Kohlendioxid das Coffein entzogen. Schließlich wird dem getrockneten Tee das in der ersten Stufe entzogene Aroma wieder aufimprägniert, indem man bei überkritischem Druck den Gasstrom mit dem zuvor abgeschiedenen Aroma belädt und dieses durch Entmischung oder Verflüssigung des Gases im Tee freisetzt. Als besonderes Merkmal wird hervorgehoben, daß die geschmacks- und farbgebenden Inhaltsstoffe des Tees, z.B. Gerbstoffe, Flavine und Rubigene, nicht mitextrahiert werden, d.h. im entcoffeinierten Tee verbleiben.

Für drei der fünf Schritte des Verfahrens (Aromaentzug, Befeuchtung, Entcoffeinierung, Trocknung, Aromaimprägnierung), nämlich den ersten, dritten und fünften Schritt, werden kostspielige Hochdruckbehälter benötigt; zudem muß der Tee zwischendurch in andere Behälter gebracht werden. Trotzdem wird das Ziel nicht erreicht, wie vergleichende Verkostungen und das Erstreben von Verbesserungspatenten zeigen. Die nur geringfügige Qualitätsverbesserung durch die Reimprägnierung des Aromas scheint auch den hohen wirtschaftlichen Aufwand nicht zu rechtfertigen; deshalb ist als Verbesserung aus der DE-PS 26 37 197 eine selektive Abtrennung des Coffeins aus dem beladenen Lösungsmittel bekannt. Hierzu wird das mit Coffein und weiteren Begleitstoffen beladene, überkritische $CO_2$ nicht durch eine Druckabsenkung vom Coffein und den Begleitstoffen befreit; vielmehr strömt das beladene $CO_2$ über einen sauren Ionenaustauscher, wo das Coffein selektiv absorbiert wird. Eine weitere Verbesserung tritt ein, indem bereits die Extraktion durch Verwendung von flüssigem $CO_2$ als Lösungsmittel selektiv für Coffein wird (DE-OS 34 13 869). Größter Wert auf ein wirtschaftliches Verfahren wurde bei zwei weiteren Verfahren gelegt, wo allerdings wieder mit überkritischem $CO_2$ extrahiert wird und die Adsorption des Coffeins außerdem an der weniger selektiven Aktivkohle erfolgt (DE-OS 33 39 181 und DE-OS 34 15 844).

Umgangen wird das Problem der Aromabeeinträchtigung, indem grüner Tee vor der Fermentation zu schwarzem Tee (DE-OS 34 14 767) oder zwar fermentierter, aber noch nicht getrockneter Tee (EU-OS 0 167 399) entcoffeiniert wird. Beide Fälle sind vergleichbar mit der Entcoffeinierung von Kaffee, wo grüne Bohnen behandelt werden und Aroma und Geschmack erst durch das nachfolgende Rösten entstehen. Vorteilhaft würden diese Möglichkeiten jedoch nur in den Ursprungsländern verwirklicht.

Alle bisher beschriebenen Verfahren können nicht die drei Forderungen (Verwendung eines unbedenklichen Lösungsmittels zur Extraktion, geringe Beeinträchtigung von Geschmack und Aroma, Einsparung von Hochdruckstufen und damit geringe Kosten) vereinen. Eine derartige Verbindung von Verfahrensmerkmalen bleibt vielmehr Aufgabe der Erfindung.

Gegenstand der Erfindung sind das im Anspruch 1 angegebene Verfahren sowie die im Anspruch 11 angegebene Vorrichtung.

Erfindungsgemäß wird also in bekannter Weise schonend entcoffeiniert, jedoch wird der Tee bereits vor

2

Entnahme einer Aromafraktion befeuchtet. Dadurch gelingt es, mit einer geringen Anzahl verschiedener Schritte einen vollbefriedigenden Tee herzustellen, der überraschenderweise im Geschmacks- und Aromaeindruck alle nach anderen Verfahren hergestellten Vergleichsmuster übertrifft.

Die Erfindung wird im folgenden anhand von Zeichnungen näher erläutert. Es sind:

Figur 1    eine schematische Darstellung der Vorrichtung gemäß der Erfindung in einer zur Durchführung des erfindungsgemäßen Verfahrens geeigneten Reihenfolge ihrer Einzelabschnitte,

Figuren 2a und 2b    eine schematische Darstellung des Hochdruckteils der erfindungsgemäßen Vorrichtung

und

Figur 3    eine schematische Darstellung der nach der Entcoffeinierung folgenden Abschnitte.

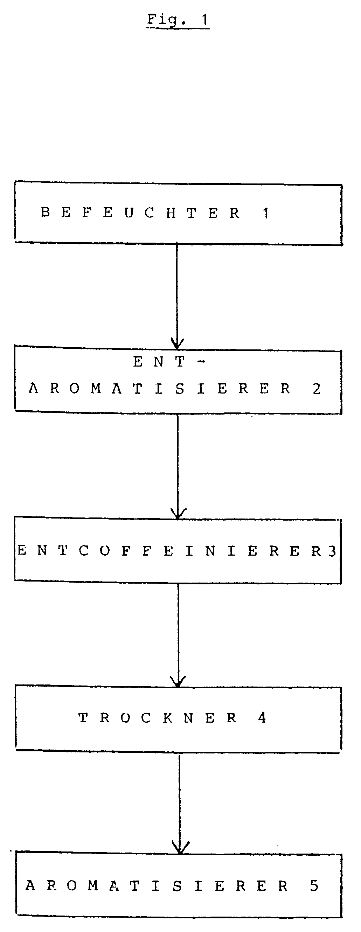

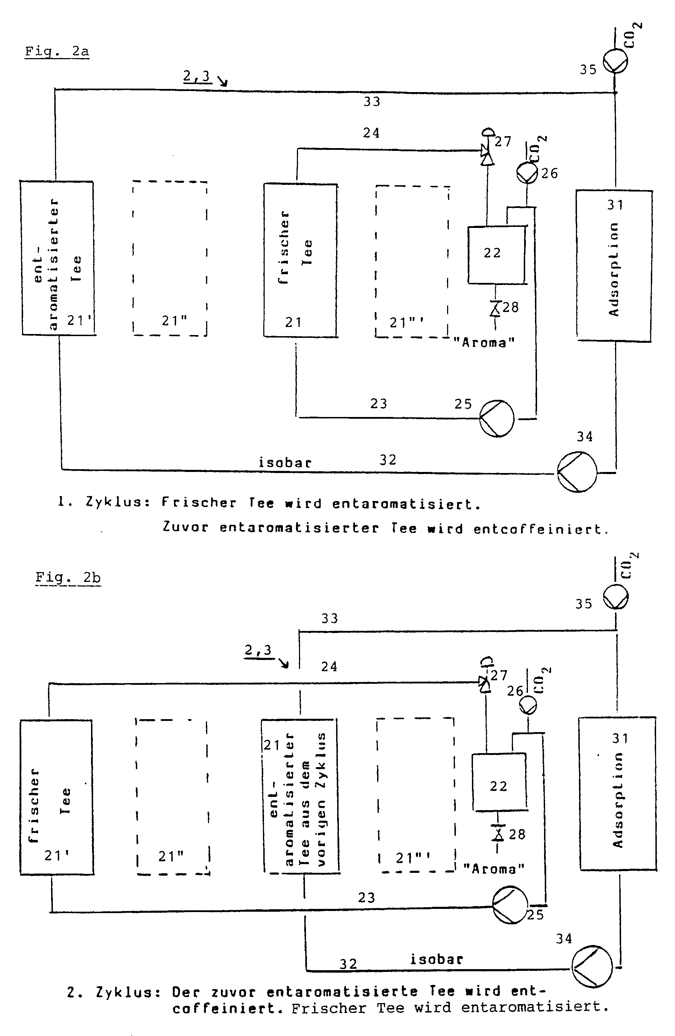

Der zu bearbeitende Tee wird in einem ersten Schritt in einem Befeuchter 1 (Figur 1) in Form einer üblichen Mischeinrichtung mit Wasser versetzt, so daß der Wassergehalt bei 25 bis 50, vorzugsweise bei 40 Gewichtsprozent liegt, und zur Entaromatisierung in einen Hochdruckbehälter 21 (Figur 2a) eines Entaromatisierers/Entcoffeinierers 2, 3 eingefüllt.

Im Gegensatz zur Lehre der DE-PS 21 27 642 wird nun der feuchte Tee zur Gewinnung der Aromafraktion bei einem Druck von zwischen 60 und 150 bar, vorzugsweise von 90 bis 110 bar, und einer Temperatur zwischen 20 und 70° C, vorzugsweise bei 50 bis 60° C, extrahiert. Die genauen Werte hängen von der Teesorte ab und müssen so gewählt werden, daß kein Coffein gelöst wird. Dazu strömt in einem ersten Zyklus (Figur 2a) temperiertes und komprimiertes $CO_2$ durch die Schüttung des Tees in Behälter 21, der über zwei Hochdruckleitungen 23, 24 mit einem Abscheider 22 verbunden ist. Zur Trennung des gelösten Gemisches vom Lösungsmittel wird in einer zweiten Stufe des ersten Zyklus der Druck des $CO_2$ mittels des Druckregulierventiles 27 verringert, wodurch sich das homogene Gemisch in drei Fraktionen, bestehend aus einer flüssigen wäßrigen Phase sowie aus flüssigem und gasförmigem $CO_2$, aufspaltet. Das flüssige $CO_2$ wird im Abscheider 22 mittels einer nicht dargestellten Heizvorrichtung verdampft und über einen nicht dargestellten Kondensator einer Flüssiggaspumpe 25 zugeführt, welche den Kreislauf des Lösungsmittels schließt. Alternativ wird das verdampfte $CO_2$ direkt einem nicht dargestellten Kompressor zugeleitet. Pro kg lufttrockenem Tee werden 10 bis 15 kg $CO_2$, vorzugsweise 20 bis 30 kg $CO_2$, umgewälzt. Das gewünschte Produkt wird als wäßrige Emulsion bzw. Suspension über Ventil 28 dem Abscheider 22 entnommen und direkt weiterverwendet. Trotz eines Vorurteils (EU-PS 0 050 482, Spalte 1, Zeilen 41 bis 43) gegen die Beständigkeit von Teearoma in Wasser ist dieses ausreichend stabil und verleiht dem damit imprägnierten, getrockneten Tee eine frische Note.

Nach Abschluß des Aromaentzugs kann ohne weitere Zwischenschritte die Entcoffeinierung begonnen werden. Dazu wird in einem zweiten Zyklus (Figur 2b) der Behälter 21 über zwei weitere Hochdruckleitungen 32, 33 mit einem weiteren Autoklaven 31 verbunden, welcher das zur Reinigung des Lösungsmittels notwendige Adsorptionsmittel enthält. Der Inhalt beider Behälter 21 und 31 wird den für die Entcoffeinierung vorgesehenen Bedingungen von Druck und Temperatur unterworfen. Der Druck kann zwischen 150 und 400 bar, vorzugsweise zwischen 250 und 350 bar, liegen, die Temperatur zwischen 10 und 100° C, vorzugsweise zwischen 60 und 70° C. Das Lösungsmittel wird zwischen den beiden Behältern mittels Kreislaufpumpe 34 umgewälzt, belädt sich im ersten 21 mit Coffein und wird im zweiten 31 wieder davon befreit. Zur Reinigung kann jedes geeignete Adsorptionsmittel, z.B. Aktivkohle oder Ionenaustauscher, eingesetzt werden. Es ist auch möglich, statt das Coffein zu adsorbieren, es in dem als Wäscher ausgestalteten Behälter 31 aus dem $CO_2$ mit Wasser auszuwaschen oder mit einem Komplexbildner, beispielsweise mit einer gerbstoffhaltigen Lösung, auszufällen. Wird das Lösungsmittel mit z.B. Aktivkohle gereinigt, müssen pro kg lufttrockenem Tee 250 bis 500 kg, vorzugsweise 300 bis 350 kg, Lösungsmittel umgewälzt werden. Die genaue Menge ist auch hierbei von der Teesorte sowie hauptsächlich von der Extraktionstemperatur abhängig. Selbstverständlich kann die Abtrennung des Coffeins außer durch Adsorption auch durch Dichteerniedrigung der Lösung mittels Drucksenkung und/oder Temperaturerhöhung) erfolgen. Wegen der isobaren Verhältnisse ist jedoch die Adsorption bevorzugt.

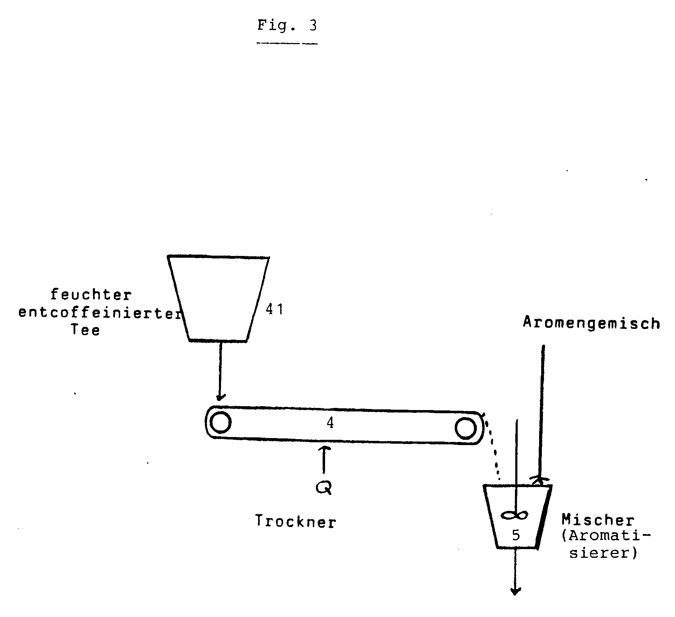

Nach Beendigung der Entcoffeinierung wird der Behälter entspannt und der feuchte Tee entnommen, beispielsweise in ein Beschickungsgefäß 41 für einen Trockner 4 (Figur 3), und auf übliche Weise durch Zufuhr von Wärme Q, z.B. in einem Band- oder Wirbelschichttrockner, bei Atmosphärendruck auf einen Feuchtegehalt von 5 bis 6 Gewichtsprozent getrocknet.

In einem nachfolgenden Mischer 5 wird dann ebenfalls unter Normaldruck die wäßrige Aromenmischung zugedüst. Möglich ist es auch, eine Mikroverkapselung der Aromastoffe vorzunehmen, wie sie von der Herstellung von löslichem Kaffee bekannt ist, und die Mikrokapseln dem getrockneten, entcoffeinierten Tee zuzusetzen.

Zur sensorischen Begutachtung wurden Teeproben nach den oben beschriebenen bekannten Verfahren entcoffeiniert und mit dem Ausgangstee sowie mit dem gemäß der Erfindung entcoffeinierten Tee verglichen. Verwendet wurde ein schwarzer Tee "Orange Broken". Die Verkostung erfolgte durch fünf Personen gemäß "J. Schormüller, Handbuch der Lebensmittelchemie, Band VI, Springer-Verlag, 1970". Bewertet wurde anhand einer Notenskala von 1 bis 5, wobei der unbehandelte Vergleichstee die Bestnote 1 erhielt.

| Entcoffeinierungsbehandlung | Bewertung |
|---|---|
| keine (Ausgangstee) | 1 |
| gemäß Erfindung | 1,5 |
| gemäß DE-PS 21 27 642 | 3 |
| gemäß DE-PS 26 37 197 | 2 |
| gemäß DE-OS 34 13 869 | 2 |
| gemäß DE-OS 34 15 844 | 3 |
| mit Dichlormethan entcoffeiniert | 5 |
| mit Ethylacetat entcoffeiniert | 5 |

Die Berwertung zeigt, daß der gemäß der Anmeldung entcoffeinierte Tee vor allen anderen bevorzugt wurde. Besonders überraschend war, daß Ausgangstee und erfindungsgemäß behandelter Tee geschmacklich kaum zu unterscheiden waren.

Eine Produktionsanlage besteht aus einer Befeuchtungseinrichtung 1, einer Trocknungseinrichtung 4 und einer Mischeinrichtung 5 sowie mindestens je einem Behälter zur Aufnahme des feuchten Tees (21), des Adsorptionsmittels (31) und der abgetrennten Aromafraktion (22); diese Behälter sind über Hochdruckleitungen 23, 24; 32, 33 miteinander verbunden.

Bevorzugt sind mehrere Behälter 21, 21', 21", 21"'zur Aufnahme des frischen oder entaromatisierten feuchten Tees vorhanden, die in Reihe oder parallel durchfahren und je nach Bedarf mit dem Abscheidebehälter 22 oder dem Adsorptionsmittelbehälter 31 verbunden werden können. Vorzugsweise werden die beiden Bearbeitungsschritte auch in einer Entaromatisierungs-/Entcoffeinierungsanlage 2, 3 nebeneinander durchgeführt. Dazu wird lediglich eine Einrichtung (z.B. Pumpe 35) zur Aufrechterhaltung des Druckes im isobar betriebenen Extraktionskreislauf benötigt. So ist beispielsweise, während Behälter 21, der frischen Tee enthält, mit dem Aromaabscheider 22 verbunden ist, der entaromatisierten Tee enthaltende Behälter 21' mit dem Adsorptionsmittelbehälter 31 verbunden, so daß in ein und derselben Anlage gleichzeitig entaromatisiert und entcoffeiniert wird.

Einer allfälligen Ergänzung von $CO_2$ im Entaromatisierungskreislauf dient Füllpumpe 26.

**Patentansprüche**

1. Verfahren zur Gewinnung eines aromatischen entcoffeinierten Tees durch

   1) Behandlung des Tees mit $CO_2$ bei einem Druck von 60 bis 150 bar und einer Temperatur von 20 bis 70 °C und Gewinnung einer aromahaltigen Fraktion durch Druckabsenkung,
   2) Behandlung des von der Aromafraktion befreiten Tees mit $CO_2$ bei einem Druck von 150 bis 400 bar und einer Temperatur von 10 bis 100 °C in Gegenwart von Feuchtigkeit und Befreiung des $CO_2$ vom gelösten Coffein,
   3) Trocknen des entcoffeinierten Tees und
   4) Zuführen der in Stufe 1) abgetrennten Aromafraktion in den entcoffeinierten und getrockneten Tee,

   dadurch **gekennzeichnet**, daß der Tee vor seiner Behandlung in Stufe 1) auf einen Wassergehalt von 25 bis 50 Gewichtsprozent befeuchtet wird und die Gewinnung der aromahaltigen Fraktion in Form einer wäßrigen Phase erfolgt, die dem entcoffeinierten und getrockneten Tee bei Normaldruck wieder zugeführt wird.

2. Verfahren nach Anspruch 1, dadurch gekennzeichnet, daß die Gewinnung der Aromafraktion bei einem Druck von 90 bis 110 bar erfolgt.

3. Verfahren nach Anspruch 1, dadurch gekennzeichnet, daß die Gewinnung der Aromafraktion bei einer Temperatur von 50 bis 70° C erfolgt.

4. Verfahren nach Anspruch 1, dadurch gekennzeichnet, daß die Befeuchtung des Tees auf einen Wassergehalt von 40 Gewichtsprozent erfolgt.

5. Verfahren nach Anspruch 1, dadurch gekennzeichnet, daß die Aromafraktion auf den getrockneten Tee aufgesprüht oder dem getrockneten Tee mikroverkapselt zugeführt wird.

6. Verfahren nach Anspruch 1, dadurch gekennzeichnet, daß die Befreiung des $CO_2$ vom gelösten Coffein durch Dichteerniedrigung oder durch Adsorption erfolgt.

7. Verfahren nach Anspruch 6, dadurch gekennzeichnet, daß als Adsorptionsmittel Aktivkohle oder Ionenaustauscher verwendet werden.

8. Verfahren nach Anspruch 1, dadurch gekennzeichnet, daß die Befreiung des $CO_2$ vom gelösten Coffein durch Auswaschen oder Ausfällen erfolgt.

9. Wasserhaltige Teearomafraktion, erhältlich durch Befeuchten von schwarzem Tee auf einen Wassergehalt von 25 bis 50 Gewichtsprozent, Extrahieren des feuchten Tees mit $CO_2$ bei einem Druck von 60 bis 150 bar und einer Temperatur von 20 bis 70° C und Druckabsenkung.

10. Vorrichtung zur Durchführung des Verfahrens nach einem der Ansprüche 1 bis 8, dadurch gekennzeichnet, daß sie einen Befeuchter (1), einen Hochdruck-Entaromatisierer (2)/Entcoffeinierer (3), bestehend aus mindestens einem zur Aufnahme von feuchtem Tee bestimmten Hochdruckbehälter (21, 21′, 21″, 21‴), der über je zwei Hochdruckleitungen (32, 33 bzw. 23, 24),in denen flüssiges oder überkritisches Kohlendioxid zirkuliert, wahlweise mit einem Adsorptionsmittelbehälter (31) oder einem Aromaabscheidebehälter (22) verbindbar ist, sowie Mitteln (25, 26; 34, 35) zum Umpumpen des Kohlendioxids und zum Aufrechterhalten des Druckes in den Hochdruckleitungen (32, 33; 23, 24) und den daran angeschlossenen Behältern (21, 21′, 21″, 21‴, 31 , 22),eine Trocknungseinrichtung (4) und eine Einrichtung (5) zum Zumischen einer Aromafraktion zu Tee aufweist.

## Claims

1. A process for the production of an aromatic decaffeinated tea by
   1) treating the tea with $CO_2$ at a pressure of from 60 to 150 bar and a temperature of from 20 to 70° C and obtaining an aroma-containing fraction by reduction of pressure,
   2) treating the tea, from which the aroma fraction has been removed, with $CO_2$ at a pressure of from 150 to 400 bar and a temperature of from 10 to 100° C in the presence of moisture and releasing the $CO_2$ from the dissolved caffeine,
   3) drying the decafffeinated tea, and
   4) adding the aroma fraction removed in step 1) to the decaffeinated and dried tea,
   characterized in that the tea, prior to its treatment in step 1), is humidified to a water content of from 25 to 50 percent by weight and that the aroma fraction is obtained as an aqueous phase which is re-added to the decaffeinated and dried tea at ambient pressure.

2. A process according to claim 1, characterized in that the aroma fraction is obtained at a pressure of from 90 to 110 bar.

3. A process according to claim 1, characterized in that the aroma fraction is obtained at a temperature of from 50 to 70° C.

4. A process according to claim 1, characterized in that the tea is humidified to a water content of 40 percent by weight.

5. A process according to claim 1, **characterized in** that the aroma fraction is sprayed onto the dried tea or is added to the dried tea in microcapsules.

6. A process according to claim 1, **characterized in** that releasing the $CO_2$ from the dissolved caffeine is effected by a reduction of pressure or by adsorption.

7. A process according to claim 6, **characterized in** that activated carbon or ion exchangers are used as adsorbing agents.

8. A process according to claim 1, **characterized in** that releasing the $CO_2$ from the dissolved caffeine is effected by washing out or precipitating.

9. A water-containing tea aroma fraction, obtainable by humidifying black tea to a water content of from 25 to 50 percent by weight, extracting the moist tea with $CO_2$ at a pressure of from 60 to 150 bar and a temperature of from 20 to 70° C and reducing the pressure.

10. An apparatus for carrying out the process according to one of claims 1 to 8, **characterized in** that it comprises a humidifier (1), a high pressure aroma extracting (2) / decaffeinating (3) device consisting of at least one high pressure container (21, 21', 21'', 21''') for receiving moist tea, said container(s)being, by means of two high pressure lines each (32, 33, and 23, 24, resp.) in which liquid or supercritical carbon dioxide is circulated, alternatively connected to a container (31) for the adsorbing agent or to an aroma separator (22); the device further comprising means (25, 26; 34, 35) for pumping the carbon dioxide and maintaining the pressure in the high pressure lines (32, 33; 23, 24) and the containers connected thereto (21, 21', 21'', 21''', 31, 22), a drying device (4) and a device (5) for the addition of an aroma fraction to the tea.

**Revendications**

1. Procédé pour obtenir du thé aromatique décaféiné par :
   1) traitement du thé avec $CO_2$ à une pression de $60.10^5$ à $15.10^6$ Pa et une température de 20 à 70° C et obtention d'une fraction aromatique par diminution de la pression,
   2) traitement du thé libéré de la fraction aromatique avec $CO_2$ , à une pression de $15.10^6$ à $40.10^6$ Pa et à une température de 10 à l00° C en présence d'humidité et libération du $CO_2$ de la caféine dissoute,
   3) séchage du thé décaféiné,
   4) introduction de la fraction aromatique isolée au cours de l'étape (1) dans le thé décaféiné et séché,
   caractérisé en ce que le thé est humidifié à un pourcentage en eau de 25 à 50 % en masse avant le traitement de l'étape (1) et en ce que l'obtention de la fraction aromatique est réalisée sous forme de phase aqueuse, qui est ajoutée à pression normale dans le thé décaféiné et séché.

2. Procédé selon la revendication 1, caractérisé en ce que la fraction aromatique est obtenue à une pression de $90.10^5$ à $110.10^5$ Pa.

3. Procédé selon la revendication 1, caractérisé en ce que la fraction aromatique est obtenue à une température de 50 à 70° C.

4. Procédé selon la revendication 1, caractérisé en ce qu'on humidifie le thé à une proportion d'eau de 40 % en masse.

5. Procédé selon la revendication 1, caractérisé en ce que la fraction aromatique est pulvérisée sur le thé séché ou additionnée au thé séché sous forme de microcapsules.

6. Procédé selon la revendication 1, caractérisé en ce qu'on libère $CO_2$ de la caféine dissoute par diminution de la densité ou par adsorption.

7. Procédé selon la revendication 6, caractérisé en ce qu'on utilise comme moyen d'adsorption du charbon actif ou un échangeur d'ions.

**8.** Procédé selon la revendication 1, caractérisé en ce qu'on libère $CO_2$ de la caféine dissoute par lavage ou par précipitation.

**9.** Fraction aromatique de thé renfermant de l'eau, obtenue par humidification de thé noir à un pourcentage en eau de 25 à 50 % en masse, puis extraction du thé humide avec $CO_2$ à une pression de $60.10^5$ à $150.10^5$ Pa et à une température de 20 à 70 °C et par diminution de la pression.

**10.** Dispositif pour mettre en oeuvre le procédé selon l'une des revendications 1 à 8, caractérisé en ce qu'il comprend un humidificateur (1), un moyen de désaromatisation (2) haute pression et un moyen pour décaféiner (3) constitués d'au moins un réservoir haute pression (21, 21', 21", 21"') déterminé pour recevoir le thé humide, qui respectivement dont chacun peut être relié à chaque deux conduites sous haute pression (32, 33 resp. 23, 24) dans lesquelles circule du gaz carbonique liquide ou supercritique, le cas échéant à un réservoir renfermant un moyen d'adsorption (31) ou à un réservoir séparateur d'arôme (22), ainsi que des moyens (25, 26 ; 34,35) pour faire circuler par pompage le gaz car-nique et pour maintenir la pression dans les conduites haute pression (32, 33 ; 23, 24) et dans les réservoirs qui y sont reliés (21, 21', 21", 21"'; 31, 32), un appareil de séchage (4) et une installation (5) pour mélanger au thé une fraction aromatique.

Fig. 1

BEFEUCHTER 1

ENT-
AROMATISIERER 2

ENTCOFFEINIERER 3

TROCKNER 4

AROMATISIERER 5

EP 0 269 104 B1

Fig. 2a

1. Zyklus: Frischer Tee wird entaromatisiert.
Zuvor entaromatisierter Tee wird entcoffeiniert.

Fig. 2b

2. Zyklus: Der zuvor entaromatisierte Tee wird entcoffeiniert. Frischer Tee wird entaromatisiert.

9

Fig. 3

feuchter
entcoffeinierter
Tee

41

Aromengemisch

4

Q

Trockner

Mischer
(Aromatisierer)

5